(19) Europäisches Patentamt
European Patent Office
Office européen des brevets

(11) **EP 2 257 107 B1**

(12) **EUROPEAN PATENT SPECIFICATION**

(45) Date of publication and mention
of the grant of the patent:
**06.09.2017 Bulletin 2017/36**

(51) Int Cl.:
*H04B 7/26* *(2006.01)*          *H04W 40/22* *(2009.01)*
*H04W 72/12* *(2009.01)*          *H04W 84/04* *(2009.01)*

(21) Application number: **09161470.1**

(22) Date of filing: **29.05.2009**

(54) **Method for determining if signals transferred between a base station and a terminal have to be relayed by a relay.**

Verfahren zur Entscheidung, ob zwischen einer Basisstation und einem Endgerät übertragene Signale durch ein Relais übermittelt werden müssen

Procédé pour déterminer si des signaux transférés entre une station de base et un terminal doivent être relayés par un relais

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**01.12.2010 Bulletin 2010/48**

(73) Proprietors:
- **Mitsubishi Electric R&D Centre Europe B.V.**
  **1119 NS Schiphol Rijk (NL)**
  Designated Contracting States:
  **FR**
- **Mitsubishi Electric Corporation**
  **Chiyoda-ku**
  **Tokyo 100-8310 (JP)**
  Designated Contracting States:
  **AT BE BG CH CY CZ DE DK EE ES FI GB GR HR HU IE IS IT LI LT LU LV MC MK MT NL NO PL PT RO SE SI SK TR**

(72) Inventors:
- **Brunel, Loïc**
  **35708, RENNES Cedex 7 (FR)**
- **Gresset, Nicolas**
  **35708, RENNES Cedex 7 (FR)**

(74) Representative: **Le Guen-Maillet**
**5, place de Newquay**
**BP 70250**
**35802 Dinard Cedex (FR)**

(56) References cited:
**GB-A- 2 398 462**

- **LEBOUDEC J-Y; RADUNOVIC B: "Optimal Power Control, Scheduling, and Routing in UWB Networks" IEEE JOURNAL ON SELECTED AREAS IN COMMUNICATIONS, IEEE SERVICE CENTER, PISCATAWAY, US, vol. 22, no. 7, 1 September 2004 (2004-09-01), pages 1252-1270, XP011117876 ISSN: 0733-8716**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates generally to a method and a device for determining if signals transferred between a base station and a terminal of a wireless telecommunication network have to be relayed by a relay.

Future wireless telecommunication networks will use higher frequency bands than the ones used by current wireless cellular telecommunication networks.

New wireless cellular telecommunication networks like wireless cellular telecommunication networks, particularly in urban environment, will have dead zones, wherein the signals transferred between base stations and terminals will be highly attenuated.

Terminals which are located at cell-edge may experience bad link performance and exhibit poor data rate. In the last decade, it has been proposed to study tripartite (or more) cooperation protocols for enhancing the data rate of terminals. For example, the deployment of relays in bad coverage areas has been proposed.

If it is not correctly controlled, the deployment of relays in a wireless cellular telecommunication network may degrade the overall system performance instead of enhancing it.

A bad choice of the cooperation technique might result in a degraded system performance. Indeed, modern multi-cellular systems suffer from interference from a cell to another. Since the bad coverage areas are basically located on the cell border, i.e. close to neighbouring cells, a high level of transmission from a relay in that zone may drastically improve the cell-edge performance at the price of degrading the cell-edge performance of neighbouring cells. If all cells provide relaying technologies, it is possible that no gain at all is observed.

Furthermore, if the total transmit power of a relay is kept constant, the power allocated to each physical resource block of the wireless telecommunication network depends on the number of physical resource blocks for which the relay relays signals. If that parameter effect is not taken into account, the association may not benefit to the overall system performance.

The patent application GB2398462 discloses improved communications network for indoor environment.

The paper of Bozidar Radunovic in IEEE journal on selected areas in communications vol22 NO7 September 2004 discloses optimal power control, scheduling, and routing in UWB networks.

The present invention aims at providing a system wherein the signals are relayed only when overall system performances are improved even when the total transmit power of the relay is kept constant.

To that end, the present invention concerns a method for determining if signals transferred between a base station and a terminal of a wireless telecommunication network have to be relayed by a relay, the terminal and the relay being located in an area of the base station, the signals being transferred on physical resource blocks of the wireless telecommunication network, the relay relaying signals, the overall transmission power of the signals transferred by the relay being independent of the number of signals transferred by the relay during a given period of time, characterised in that the method comprises the steps, executed for each physical resource block of at least a part of the physical resource blocks on which signals are transferred by the base station or the terminal of :

- calculating a figure of merit of using relaying for the signal transferred on the physical resource block,
- calculating a figure of merit of not using relaying for the signal transferred on the physical resource block,
- calculating a power adjustment value for the relay which is dependent on the number of physical resource blocks on which signals are transferred and relayed by the relay,
- deciding if the signal transferred on the physical resource block is relayed by the relay according to the calculated figures of merit and the power adjustment value.

The present invention concerns also a device for determining if signals transferred between a base station and a terminal of a wireless telecommunication network have to be relayed by a relay, the terminal and the relay being located in an area of the base station, the signals being transferred on physical resource blocks of the wireless telecommunication network, the overall transmission power of the signals transferred by the relay being independent of the number of signals transferred by the relay during a given period of time, characterised in that the device for determining if signals transferred between a base station and a terminal of a wireless telecommunication network have to be relayed comprises :

- means for calculating, for each physical resource block of at least a part of the physical resource blocks on which signals are transferred by the base station or the terminal, a figure of merit of using relaying for the signal transferred on the physical resource block,
- means for calculating, for each physical resource block of at least a part of the physical resource blocks on which signals are transferred, a figure of merit of not using relaying for the signal transferred on the physical resource block,
- means for calculating, for each physical resource block of at least a part of the physical resource blocks on which signals are transferred by the base station or the terminal, a power adjustment value for the relay which is dependent on the number of physical resource blocks on which signals are transferred and relayed by the relay,

- means for deciding, according to the calculated figures of merit and the power adjustment value and for each physical resource block of at least a part of the physical resource blocks on which signals are transferred by the base station or the terminal, whether the signal transferred on the physical resource block is relayed or not.

Thus, the signals are relayed only when overall system performances are improved even when the total transmit power of the relay is kept constant.

By taking the decision on physical resource block basis, the decision is accurate and can be implemented in a simple fashion, whatever the resource allocation profile.

Furthermore, more the relay relays signal on each physical resource block, less the transmit power of each signal transferred by the relay decreases. When it is decided that signal transferred on one physical resource has to be relayed, it has then an impact on other signals relayed by the relay. The present invention takes that situation.

According to a particular feature, the method further comprises the step of calculating a base station power adjustment value to be applied on signals transferred by the base station, the base station power adjustment value being dependent on the average number of physical resource blocks for which relaying is performed and the decision whether the signal transferred on the physical resource blocks is relayed or not is further performed according to the base station power adjustment value.

Thus, if the base station does not transmit signal on a physical resource block on which a relay relays signals at the same time as the relay, the base station can share the power which should normally be used by the base station for transferring signals on the physical resource block for other signals.

The overall system performances are improved.

According to a particular feature, the relay power correction value and the base station power adjustment value are dependent on the average number $N_j$ of physical resource blocks on which signals are relayed by the relay during $N_T$ time slots, on the number $N_A$ of physical resource blocks available for parallel transmissions during a time slot and on the average number of time slots $N_T$ spacing two moments wherein decisions if signals are relayed is taken.

According to a particular feature, plural relays are comprised in the area of the base station and the method comprises further step, executed for each physical resource block, of determining which relay is the best candidate for relaying signal transferred on the physical resource block.

Thus, by determining the best candidate for relaying signal transferred on the physical resource block and further deciding according to the calculated figures of merit and the power adjustment value whether the signal transferred on the physical resource block is relayed or not, the overall system performances are improved.

According to a particular feature, the decision whether the signal transferred on the physical resource block is relayed or not is taken by executing a division between the figure of merit of using relaying for the signal transferred on the physical resource block and the figure of merit of not using relaying signal transferred on the physical resource block.

Thus, link condition for terminal located in bad coverage area of the base station is improved.

According to a particular feature, the decision whether the signal transferred on the physical resource block is relayed or not is taken by checking if the figure of merit of using relaying for the signal transferred on the physical resource block is greater than the figure of merit of not using relaying for the signal transferred on the physical resource block.

Thus, if the figure of merit relates to a spectral efficiency, the cumulative gain in capacity or an average per physical resource block spectral efficiency is improved.

More precisely, if the figure of merit of using relaying for the signal transferred on the physical resource block is greater than the figure of merit of not using relaying signal transferred on the physical resource block, the comparison returns one i.e. the signal transferred on the physical resource block is relayed, else it returns zero i.e. the signal transferred on the physical resource block is not relayed.

The number of physical resource blocks using a given relay is maximized.

According to a particular feature, before calculating the metrics, the method comprises further steps of:

- determining, for each resource block, a value which is representative of the link quality between the base station and the terminal and representative of the link quality between the base station and the terminal via the relay,
- sorting the resource block according to the determined value for the resource block.

Thus, the PRB for which the profit of relaying is the most important are processed first. The PRBs can then be tested sequentially instead of testing all the combinations of decisions whether a PRB use relaying or not. The complexity is reduced.

According to a particular feature, the value which is representative of the link quality between the base station and the terminal and representative of the link quality between the base station and the terminal via the relay is not dependent on the relay power correction value and the base station power adjustment value.

Thus, the sorting needs to be done only one time.

According to a particular feature, the method comprises the step executed for each physical resource block of calculating a global figure of merit which is dependent on figures of merit of using or not relaying for the signals transferred on plural physical resource blocks.

According to a particular feature, the physical resource blocks are sorted in decreasing order according to a given metric and the global figure of merit is dependent on figures of merit of using or not relaying for signals transferred on physical resource blocks having a lower order than the physical resource block for which decision is taken and for which relaying have been decided to be applied.

According to a particular feature, the global figure of merit is dependent on figures of merit of using or not relaying signals transferred on each physical resource block.

Thus, it is decided to use relaying for a given PRB only if this is profitable to the overall system, and the overall system performance is increased.

According to a particular feature, the wireless telecommunication network is a wireless cellular telecommunication network.

According to still another aspect, the present invention concerns a computer program which can be directly loadable into a programmable device, comprising instructions or portions of code for implementing the steps of the method according to the invention, when said computer program is executed on a programmable device.

Since the features and advantages relating to the computer program are the same as those set out above related to the method and device according to the invention, they will not be repeated here.

The characteristics of the invention will emerge more clearly from a reading of the following description of an example embodiment, the said description being produced with reference to the accompanying drawings, among which :

Fig. 1 represents the architecture of a wireless cellular telecommunication network in which the present invention is implemented;
Fig. 2 is a diagram representing the architecture of a relay in which the present invention is implemented;
Fig. 3 is a diagram representing the architecture of a base station in which the present invention is implemented ;
Fig. 4 discloses a first example of an algorithm for determining if signals have to be relayed by a relay according to the present invention ;
Fig. 5 discloses a second example of an algorithm for determining if signals have to be relayed by a relay according to the present invention.

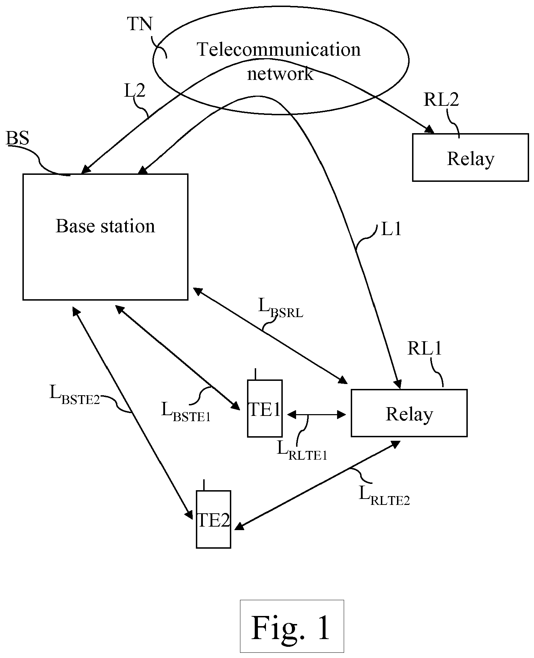

**Fig. 1** represents the architecture of a wireless telecommunication network in which the present invention is implemented.

More precisely, the present invention will be disclosed in an example wherein the wireless telecommunication network is a wireless cellular telecommunication network.

In the wireless cellular telecommunication network of Fig. 1, a base station BS transfers signals to at least one terminal TE handled by the base station BS.

The base station BS is also named an access node or a node B or an enhanced node B.

A base station BS handles a terminal TEi, with i=1 to $N_{UT}$ the number of terminals handled by the base station BS, when the terminal TEi is located in the cell managed by the base station BS and when the base station BS has the information necessary for enabling the terminal TEi to establish a communication with a remote device not shown in Fig. 1 through the base station BS.

A cell managed by a base station BS is an area in which the base station BS and a terminal TEi can communicate.

The base station BS transfers signals to the terminal TEi through a downlink channel and receives signals transferred by the terminal TEi through an uplink channel.

In the Fig. 1, plural relays RLj, with j=1 to $N_{RN}$ the number of relays located in the cell of the base station BS, are shown. More precisely, two relays RL1 and RL2 are shown. The relays RL1 and RL2 may relay signals transferred between the base station BS and at least one terminal TEi.

When a relay RLj relays a downlink signal for a terminal TEi, the relay RLj monitors the signals transferred by the base station BS to the terminal TEi on a physical resource block (PRB). The relay RLj retransmits on a PRB of another time slot the signal to the terminal TEi.

A PRB is the smallest element of resource allocation assigned by a scheduler.

Generally, allocation of PRBs is handled by a scheduling function at the base station BS.

For example, in OFDMA (orthogonal frequency division multiple access) adjacent subcarriers are grouped together on a slot by slot basis to form PRB. PRBs thus have both a time and frequency dimension.

When a relay RLj relays an uplink signal for a terminal TEi, the relay RLj monitors the signal transferred by the terminal TEi to the base station BS on a PRB. The relay RLj retransmits on a PRB of another time slot the signal to the base station BS.

The PRB can be the same as the one on which original signal is transmitted by the base station and/or by terminal TEi or can be different.

It has to be noted here that, in some embodiments of the present invention, within a time slot, a relay RLj does not transmit signal on the same PRB as another relay RL comprised in the cell of the base station BS.

The base station BS is connected to a telecommunication network TN which links each base station BS to core network devices not shown in the Fig. 1.

The core network devices handle the operation of the wireless cellular telecommunication network.

The base station BS may be linked, through the telecommunication network TN, to each relay RLj , with j=1 to $N_{RN}$ which is located in the cell managed by the base station BS.

The relay RL1 may be linked to the base station BS through a wired link L1. Through the link L1, the relay RL1 and the base station BS may exchange messages. In a variant, the relay RL1 and the base station BS may exchange messages through a wireless link $L_{BSRL}$.

The relay RL1 and/or the base station BS measure the link conditions on the wireless link $L_{BSRL}$.

The link condition may be for example the path gain on the link $L_{BSRL}$ and/or may be the Signal to Interference-plus-Noise Ratio (SINR) measured by the relay RL1 and/or the base station BS on the link $L_{BSRL}$.

The relay RL2 may be linked to the base station BS through a wired link L2. Through the link L2, the relay RL2 and the base station BS exchange messages. In a variant, the relay RL2 and the base station BS may exchange messages through a wireless link not shown in Fig. 1.

The relay RL2 and/or the base station BS measure the link conditions on the wireless link between relay RL2 and/or the base station BS.

The link condition may be for example the path gain on the wireless link and/or may be the SINR measured by the relay RL2 and/or the base station BS on the wireless link.

In the Fig. 1, only one base station BS, two relays RL1 and RL2 and two terminals TE are shown for the sake of clarity but in practice the wireless cellular telecommunication network comprises a large number of base stations BS, relays RL and terminals TE.

The terminals TE1 and TE2 are for example mobile phones, personal digital assistants, personal computers.

The terminal TE1 is linked to the base station BS through a wireless link $L_{BSTE1}$, the terminal TE1 is linked to the relay RL1 through a wireless link $L_{RLTE1}$ and is linked to the relay RL2 through a wireless link not shown in Fig. 1.

The terminal TE1 and/or the base station BS measure the link conditions on the wireless link $L_{BSTE1}$. The terminal TE1 and/or the relay RL1 measure the link conditions on the wireless link $L_{RLTE1}$.

The terminal TE1 and/or the relay RL2 measure the link conditions on the wireless link, not shown in Fig. 1, between the terminal TE1 and the relay RL2.

The link conditions may be the path gain on the wireless links and/or may be the SINR measured by the relay RL1 and/or RL2 and/or the terminal TE1 on the links $L_{BSTE1}$ and $L_{RLTE1}$.

The terminal TE2 is linked to the base station BS through a wireless link $L_{BSTE2}$, the terminal TE2 is linked to the relay RL1 through a wireless link $L_{RLTE2}$ and is linked to the relay RL2 through a wireless link not shown in Fig. 1.

The terminal TE2 and/or the base station BS measure the link conditions on the wireless link $L_{BSTE2}$. The terminal TE2 and/or the relay RL1 measure the link conditions on the wireless link $L_{RLTE2}$. The terminal TE2 and/or the relay RL2 measure the link conditions on the wireless link, not shown in Fig. 1, between the terminal TE2 and the relay RL2.

The link conditions may be the path gain on the wireless links and/or may be the SINR measured by the relay RL1 and/or RL2 and/or the terminal TE2 on the links $L_{BSTE2}$ and $L_{RLTE2}$.

The interference experienced at any terminal TEi with i=1 to 2 may be created by other base stations and/or other relays RLj than the one the terminal TEi is currently communicating through and thus varies according to the proportion of use of the relays on neighbouring cells.

According to the invention, each relay RLj has a total power budget $P_{RN}$ which is shared between terminals taking benefit from relaying with the considered relay RLj.

Then, more the number of PRBs taking benefit of a relay RLj is, less is the transmission power of the signals transferred on each PRB.

For downlink signals, each relay RL may only monitor signals transmitted by the base station BS on identified PRB.

For each of these identified PRB, the relay RLj retransmits on a PRB of another time slot the monitored signals or another version signals derived from the monitored one. The other version signals might be provided to the relay RL by another mean, for example a dedicated channel between the base station BS and the relay RL.

The PRB may be the same as the original signal transmitted by the base station BS or may be re-scheduled to a better allocation. In some particular embodiments, in a same time slot, a relay RL never transmits on the same PRB as another relay RL located in the same cell of a base station BS as itself.

For uplink signals, each relay RLj only monitors signals transmitted by a terminal TE on identified PRB.

For each of these identified PRB, the relay RLj retransmits on a PRB of another time slot the monitored signals or another version signals derived from the monitored one. The PRB may be the same as the original signal transmitted by the terminal TE or may be re-scheduled to a better allocation. The signals might also be transmitted to the base station BS by another mean, for example a dedicated channel between the relay RL and the base station BS.

For downlink signals, power control can be performed at the base station BS and at the relay RLj. For example, a uniform power boosting over PRB may be performed at the relay RL.

A PRB/relay association may be performed. A PRB is associated to a relay RLj if the relay RLj may potentially be used for improving the reception of signal transferred in the PRB.

Several protocols, for example orthogonal protocols, may be used for relaying signals. Orthogonal protocols may be orthogonal amplify-and-forward protocol, or orthogonal detect-and-forward protocol or orthogonal decode and forward protocol.

In orthogonal amplify-and-forward protocol, for example for downlink signals, the base station BS transmits in a first time slot signal to the terminal TEi, the relay RLj receives the signal as well, applies a power correction and transmits it to the terminal TEi during a second time slot on a PRB where the base station BS does not transmit any signal.

In orthogonal detect-and-forward protocol, for example for downlink signals, the base station BS transmits in a first time slot signal to the terminal TEi, the relay RLj detects the signal for example by using a cyclic redundancy check code embedded in the data and transmits it to the terminal TEi during a second time slot only if a correct detection is performed.

In orthogonal decode and forward protocol, for example for downlink signals, the base station BS transmits in a first time slot signal to the terminal TEi, the relay RLj decodes the signals onto data, re-encode the data using another encoding scheme, transmits it to the terminal TEi during a second time slot.

All the orthogonal protocols for relaying are grouped under the wording Orthogonal Process and Forward (OPF) protocols.

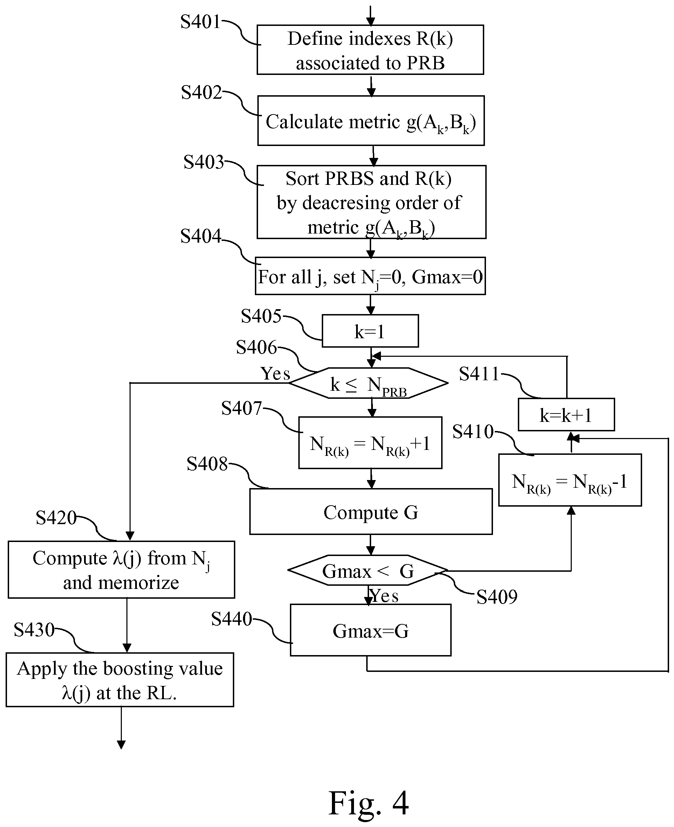

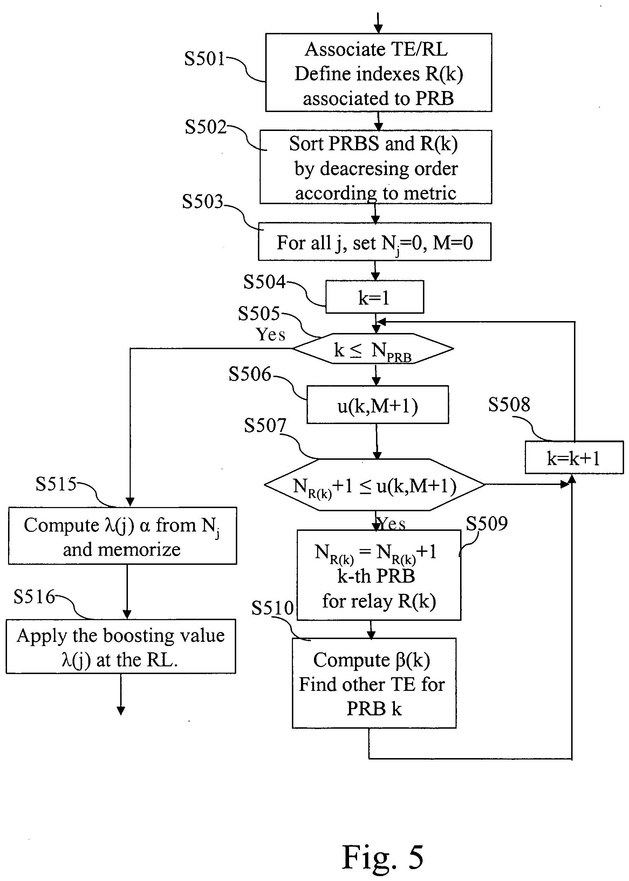

As it has already been mentioned, each relay RLj has a total power budget $P_{RN}$ which is shared between PRBs used for relaying signals. For simplicity, it is assumed that the load of the j-th relay RLj located in the cell of the base station BS is equal to $N_j/(N_A N_T)$, where $N_j$ is the average number of PRB on which signals are relayed by the j-th relay RLj during $N_T$ time slots, $N_A$ is the number of PRB available for parallel transmissions over the bandwidth during one time slot and $N_T$ is the average number of time slots spacing two scheduling events i.e. two moments wherein the algorithms disclosed in Figs. 4 or 5 are executed.

It means that, on average, in each time slot, only $N_j/N_T$ PRBs are used at the j-th relay RLj. For instance, in a system using Orthogonal Frequency Division Multiplexing (OFDM), in each OFDM symbol, only $N_j/(N_A N_T)$ are effectively used for transferring signals.

The number of PRBs used by a relay RLj during a time slot remains as equal to $N_j / N_T$ as possible.

The interference experienced at a terminal TEi may be created by base stations and/or relays and thus varies according to the proportion of use of the relays on neighbouring cells.

Each terminal TEi monitors the signals transferred by surrounding base stations BS in order to select the best base station BS.

Once the base station BS is selected, each terminal TEi measures the path gain on each PRB allocated to the terminal TEi with surrounding relays RL which are located in the cell of the selected base station BS.

Thus, an association between each PRB allocated to the terminal TEi and the relay RLj providing the best path gain is performed.

According to the present invention, decision of relaying communication between a terminal TEi and a base station BS is made on PRB basis.

Thus, a given terminal TEi may have a part of signals data transferred on PRBs transmitted thanks to a relay RLj and another part of signals data transferred on PRBs without any relay RL or another part of signals data transferred on PRBs with another relay RL. This allows to consider the relaying protocol choice per PRB without considering the variable resource allocation of each UT.

According to the invention, in order to decide whether or not signals transferred on PRBs have to be relayed, a general figure of merit G has to be optimized.

G is decomposed into a sum:

$$G = \sum_k g(\alpha A_k, \lambda_j B_k)$$

where $A_k$ relates to the link $L_{BSTE}$ quality and $B_k$ relates to the link combining $L_{BSRL}$ and $L_{RLTE}$ quality for the signal transferred on the k-th PRB. For example, $A_k$ is the attenuation experienced on the link $L_{BSTE}$ and $B_k$ is the attenuation experienced on the link $L_{RLTE}$.

Function $f_N()$ is the figure of merit of the transmission with no relaying and function $f_P()$ is the figure of merits of the transmission using relaying with the protocol (P).

It is decided that relaying is used for a given PRB only if $f_P()$ is greater than $f_N()$.

The relay power correction value $\lambda_j$ applied at the j-th relay RLj is constant for all the PRBs for which the relay RLj relays signals.

For example, $\lambda_j = N_A N_T / N_j$. Usually, $\lambda_j$ is limited to $N_A$, and without lack of generality, we consider in the following that $N_j$ is sufficiently large to keep $\lambda_j$ lower than $N_A$.

The relay power correction value $\lambda_j$ at the j-th relay is a decreasing function of $N_j$, the number of PRBs for which the relay RLj relays signals, as the total power budget $P_{RN}$ of the relay RLj is shared between the PRBs.

The variable $\alpha$ is a base station power adjustment value which may be applied at the base station BS. The variable $\alpha$ may depend on the average number of PRBs for which relaying is performed.

The base station power adjustment value $\alpha$ is an increasing function of the total number of PRBs for which the relays are active.

Thus, it is easy to know for a single PRB if it can take profit from relaying, but the problem of evaluating the impact of the decision of this PRB using relaying or not on the overall system is not trivial, and is solved by the present invention.

The general figure of merit G to be optimized may be defined according to different metrics. We consider that a subset of PRBs is assumed to use relaying, and we compute the general metric G corresponding to this choice.

A first example of metric is the number of PRBs on which the relay RL relays signals.

By maximizing this number, and under the condition that the selected PRBs show benefit from using relaying, the use of a relay RL is maximised and improves the cell edge throughput. In that case:

$$\begin{cases} \text{k} - \text{th PRB uses relaying, } g(\alpha A_k, \lambda_j B_k) = 1 \\ \text{else } g(\alpha A_k, \lambda_j B_k) = 0 \end{cases}$$

A second example of metric is the cumulative gain in capacity or an average per PRB spectral efficiency which improves the data rate of a subset of PRBs.

In that case, g() can be chosen as :

$$\begin{cases} \text{k} - \text{th PRB uses relaying, } g(\alpha A_k, \lambda_j B_k) = f_p(\alpha A_k, \lambda_j B_k) \\ \text{else } g(\alpha A_k, \lambda_j B_k) = f_N(\alpha A_k) \end{cases}$$

A third example of metric is an empirical metric in favour of bad coverage terminals TE.

In that case, g() can be chosen as :

$$\begin{cases} \text{k} - \text{th PRB uses relaying, } g(\alpha A_k, \lambda_j B_k) = f_p(\alpha A_k, \lambda_j B_k) / f_N(\alpha A_k) \\ \text{else } g(\alpha A_k, \lambda_j B_k) = 1 \end{cases}$$

Testing all the combinations of decisions of using relaying or not for all PRBs is not practical. In the following, we describe how to design a practical implementation leading to an optimized general figure of merit. From a general point of view, the function g(x,y) is monotonic, i.e.

$$\forall (x, x', y, y', a, b), \ g(x, y) \geq g(x', y') \Leftrightarrow g(ax, by) \geq g(ax', by')$$

This means that by changing the relay power correction value $\lambda_j$ of a relay RLj and by choosing two PRBs of index k1 and k2 associated to the same relay RLj, R(k1)=R(k2), we have :

$$\forall (\alpha, \lambda_j), \ g(A_{k1}, B_{k1}) \geq g(A_{k2}, B_{k2}) \Leftrightarrow g(\alpha A_{k1}, \lambda_j B_{k1}) \geq g(\alpha A_{k2}, \lambda_j B_{k2})$$

In other words, if the PRBs are sorted by decreasing or increasing values of $g(A_k, B_k)$, whatever the relay power correction value applied at the relay RLj and the base station power adjustment value applied at the base station BS, the list order remains unchanged.

The present invention takes profit of this property in combination with the monotonic properties of $\alpha$ and $\lambda_j$.

Sorting the PRBs by decreasing or increasing values avoids testing all possible decisions of relaying or not which results in lower complexity. By deciding for the PRB which take more benefit from relaying whether relaying must be used or not, the overall gain of the system is maximized.

In the following, the PRBs are treated sequentially after having being sorted. Thus, when processing the decision on relaying or not for a PRB, the former PRBs relaying status have already been stated, and the later PRBs are still on a non-relaying status. The considered PRB is then assumed to use relaying, and the impact of this decision on the general figure of merit G is evaluated. If the impact is positive, relaying is used for the considered PRB, else relaying is not used, and the PRB relaying status is stored.

According to a particular mode of realisation of the present invention, the throughput is a criterion which allows to choose if relaying is profitable or not. For terminals TE for which a relay RL is relaying downlink signals for a given PRB, the equivalent SINR is a combination of the signal plus interference plus noise component SINR experienced on the link between the base station BS and the terminal TE through the relay RL.

For orthogonal amplify and forward protocol or any protocol that include a simple retransmission of the signal without changing it, the throughput on the k-th PRB is expressed as :

$$C(\alpha A_k + \lambda_j B_k)/2$$

where $A_k = SINR_{BSTEk}$ is the SINR observed on the k-th PRB used for the transmission from the base station BS to the terminal TEi. $B_k = SINR_{BSRLTEk}$ is the SINR observed on the k-th PRB used for the transmission from the base station BS to the terminal TEi via the relay RLj and considering a reference transmit power at the relay RLj.

The variable $\lambda_j$ is the relay power correction value at the relay RLj.

It is worth using the relay RLj for the signals transferred on the k-th PRB as soon as $C(\alpha A_k + \lambda_{j=R(k)}B_k)/2 > C(\alpha A_k)$, it is then decided thanks to the invention, by the computation of the general figure of merit G, if it is profitable for the overall system that the k-th PRB use relaying or not.

For example, if C() is chosen as the Shannon capacity of an AWGN channel, $C(\alpha A_k) = \log_2 (1 + \alpha A_k)$.

Thus, for such a protocol, we can choose the set of functions to be applied with the algorithm, and that meet the needed properties of $g(\alpha A_k + \lambda_{j=R(k)}B_k)$:

$$f_N(\alpha A_k) = C(\alpha A_k)$$

$$f_p(\alpha A_k, \lambda_{j=R(k)}B_k) = C(\alpha A_k + \lambda_j B_k)/2$$

$$\lambda_{j=R(k)} = N_A N_T / N_{R(k)}$$

$\alpha = 1$ when no base station power adjustment is applied to the base station BS.

If an Orthogonal Process and Forward protocol is used at the j-th relay RLj, then a gain of the energy needed to transmit on $\sum N_j / 2$ PRBs is experienced at the base station BS assuming that transmission at the base station BS occurs on every other time slot of the relaying protocol.

Thus, the base station power adjustment value $\alpha$ that might be applied at the base station BS is an increasing function of $\sum_j N_j / N_T$, which represents the total number of PRBs used for relaying, per time slot:

$$\alpha = \frac{N_A N_T}{N_A N_T - \sum_j N_j / 2}$$

Indeed, when an orthogonal protocol is used, the loss of spectral efficiency is due to the fact that the base station BS and the relays RL cannot transmit on the same resource at the same time to the same terminal TE.

Thus, the base station BS may not transfer signals to a given terminal TEi on PRBs which correspond to the one used by the relay RLj for transmissions to the terminal TEi. It has to be noted here that the base station BS may transfer signals to a terminal TEi on PRBs which correspond to the one used by the relays RL for transmissions to another terminal TE.

That other terminal TE is chosen such that, on the other terminal, the interferences generated by the signals transferred to or by the terminal are low as well as, on the terminal, the interferences generated by the signals transferred to or by the other terminal are low.

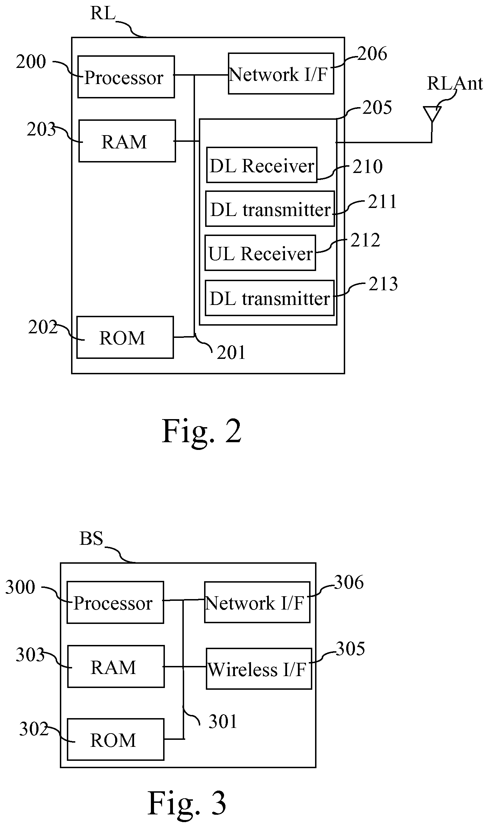

**Fig. 2** is a diagram representing the architecture of a relay in which the present invention is implemented.

The relay RLj has, for example, an architecture based on components connected together by a bus 201 and a processor 200 controlled by the program as disclosed in the Fig. 4 or 5.

The bus 201 links the processor 200 to a read only memory ROM 202, a random access memory RAM 203, a network interface 206 and a wireless interface 205.

The memory 203 contains registers intended to receive variables and the instructions of the program as disclosed in the Figs. Fig. 4 or 5.

The processor 200 controls the operation of the wireless interface 205.

The read only memory 202 contains instructions of the program as disclosed in the Fig. 4 or 5, which are transferred, when the relay RLj is powered on, to the random access memory 203.

The network interface 206 is for example a DSL (Digital Subscriber Line) modem, or an ISDN (Integrated Services Digital Network) interface, etc. Through such interface, the relay RLj may transfer messages to the base station BS.

The wireless interface 205 enables the relay RLj to transfer and/or receive signals or messages to/from the base station BS and to/from the at least one terminal TEi.

The wireless interface 205 may comprise a downlink reception module 210 which receives signals transferred by at least one base station BS, may comprise a downlink transmission module 211 which transfers signals to at least one terminal TEi, may comprise an uplink reception module 212 which receives signals transferred by at least one terminal TEi and may comprise an uplink transmission module 213 which transfer signals to at least one base station BS.

**Fig. 3** is a diagram representing the architecture of a base station in which the present invention is implemented.

The base station BS has, for example, an architecture based on components connected together by a bus 301 and a processor 300 controlled by the program as disclosed in the Fig. 4 or 5.

The bus 301 links the processor 300 to a read only memory ROM 302, a random access memory RAM 303, a wireless interface 305 and a network interface 306.

The memory 303 contains registers intended to receive variables and the instructions of the program related to the algorithm as disclosed in the Fig. 4 or 5.

The processor 300 controls the operation of the network interface 306 and of the wireless interface 305.

The read only memory 302 contains instructions of the programs related to the algorithm as disclosed in the Fig. 4 or 5, which are transferred, when the base station BS is powered on, to the random access memory 303.

The base station BS is connected to the telecommunication network TN through the network interface 306. For example, the network interface 306 is a DSL (Digital Subscriber Line) modem, or an ISDN (Integrated Services Digital Network) interface, etc. Through such interface, the base station BS may transfer messages to at least one relay RLj or to core network devices CN which manage the wireless cellular telecommunication network.

The wireless interface 305 comprises at least a downlink transmission module which transfers signals to at least one terminal TEi relayed or not by the relay RLj and an uplink reception module which receives signals transferred by at least one terminal TEi, relayed or not by the relay RLj.

**Fig. 4** discloses a first example of an algorithm for determining if signals have to be relayed by a relay according to the present invention.

The present algorithm is executed by the base station BS or by each relay RL or by at least one core network device of the wireless cellular telecommunication network.

The present algorithm is executed periodically and/or on particular events, for example when a terminal TE enters in the cell of the base station BS.

The present algorithm will be disclosed when it is executed by the processor 300 of the base station BS.

In the present algorithm, the same relay power correction value is applied to all signals in destination of the terminals TE for which a relay RLj, for example the relay RL1, relays signals.

At step S401, the processor 300 associates each PRBk to a relay RLj.

For example, the processor 300 obtains, for each PRB used for transferring signal to a terminal TEi with i=1 to $N_{UT}$ located in the cell of the base station BS and for each relay RLj with j=1 to $N_{RN}$, the relay RLj which provides the best path gain.

The processor 300 obtains, for each kth-PRB used for transferring signal, the link $L_{BSTE}$ quality $A_k$ and the link combining $L_{BSRL}$ and $L_{RLTE}$ quality $B_k$.

For example, $A_k$ is the attenuation experienced on the link $L_{BSTE}$ and $B_k$ is the attenuation experienced on the link $L_{RLTE}$.

The path gain is somehow linked to the distance between the terminal TEi and the relay RLj.

In another example, interference plus noise component is used for pairing each PRBk to a relay RL.

The processor 300, defines, for each PRB used for transmission of signals to a terminal TEi located in the cell of the base station an index R(k) which is equal to the identifier j of the relay RLj which provides the best path gain.

The processor 300 obtains, for each kth-PRB used for transferring signal, the link $L_{BSTE}$ quality $A_k$ and the link combining $L_{BSRL}$ and $L_{RLTE}$ quality $B_k$.

The index R(k) is representative of the association of the k-th PRB to the relay RLj.

A next step S402, the processor 300 calculates for each PRB with k= 1 to $N_{PRB}$, the function $g(A_k,B_k)$.

At next step S403, the processor 300 sorts the PRBs with k=1 to $N_{PRB}$, and their respective index R(k) with k=1 to $N_{PRB}$ in decreasing order according to their metric value $g(A_k,B_k)$.

This step is optional, and allows for some metrics g() for reducing the complexity of the algorithm follow up, as it will be explained later.

$N_{PRB}$ is equal to the total number of PRBs used by the base station BS for transferring signals to terminals TE.

It has to noted here that in a variant, the steps S402 and S403 are not executed. According to that variant, the processor 300 moves from step S401 to step S404.

At next step S404, the processor 300 sets for each relay RLj, the variables $N_j$ and Gmax to null value.

At next step S405, the processor 300 sets a variable k to one. The variable k is representative of the k-th PRB processed by the present algorithm.

At next step S406, the processor 300 checks if the variable k is equal to or lower than $N_{PRB}$.

If the variable k is equal to or lower than $N_{PRB}$, the processor 300 moves to step S420. Otherwise, the processor 300 moves to step S407.

Optionally, a test is made to check if a PRB associated to the same relay RL already lead the algorithm to go to step S410.

Indeed, by using the sorting of the PRB according to the $g(A_k,B_k)$ values, and by using the monotonic property of the function g(), all PRBs sorted after a given k-th PRB and associated to the same relay RL will provide less gain to the global figure of merit than the k-th PRB. Thus, no need to test whether relaying is profitable to these PRB or not.

At step S407, the processor 300 increments the variable $N_{R(k)}$ by one. $N_{R(k)}$ is equal to the number of PRBs relayed by the relay RLj associated to the k-th PRB.

At next step S408, the processor 300 determines the global figure of merit G taking into account the updated values of $a$ and $\lambda_j$, derived from the $N_j$ values and assuming that the k-th PRB is using relaying. Indeed, as already explained, the $\alpha$ and $\lambda_j$ depends on the number of PRBs relayed by the relay RL, and in particular must be recomputed according to the recently modified value of $N_{R(k)}$.

The general figure of merit G has to be optimized and is decomposed into a sum, which is done on all PRBs:

$$G = \sum_{k'} g(\alpha A_{k'}, \lambda_j B_{k'}).$$

At next step S409, the processor 300 checks if Gmax is strictly lower than G.

If Gmax is strictly lower than G, the processor 300 moves to step S440, sets Gmax to the value G and stores that the signal transfer on the k-th PRB has to be relayed by the relay RLj.

After that, the processor 300 moves to step S411.

If Gmax is not strictly lower than G, the processor 300 moves from step S409 to step S410.

At step S410, the processor 300 decrements the variable $N_{R(k)}$ by one, i.e., does not apply relaying for the signal transmitted on the k-th PRB.

At next step S411, the processor 300 increments the variable k by one, i.e. considers next PRB and returns to step S406 already described.

At step S420, the processor 300 computes for each relay RLj, the relay power correction value $\lambda_j = N_A N_T / N_{j=NR(k)}$.

At next step S430, the processor 300 transfers to each relay RLj, the corresponding relay power correction value $\lambda_j$.

**Fig. 5** discloses a second example of an algorithm for determining if signals have to be relayed by a relay according to the present invention.

The present algorithm is executed by the base station BS or by each relay RL or by at least one core network device of the wireless cellular telecommunication network.

The present algorithm is executed periodically and/or on particular events, for example when a terminal TE enters in the cell of the base station BS.

The present algorithm will be disclosed when it is executed by the processor 300 of the base station BS.

The present algorithm is a simplification of the algorithm as disclosed in Fig. 4 when the metric is the number of PRBs on which the relay RL relays signals and using the optional sorting and testing described in the algorithm of Fig. 4 . Indeed, the total number of PRBs on which the j-th relay is used has to be maximized.

It has to be noted here that $N_A N_T B_k / f_P^{(-1)}(f_N(A_k))$ represents the maximal number of PRBs to be relayed by the j-th relay RLj with a benefit.

By sorting the PRBs with k=1 to $N_{PRB}$, and their respective index R(k) with k=1 to $N_{PRB}$ in decreasing order according to their metric $g(A_k,B_k)$ value, the first sorted PRBs are the best candidates for relaying.

Since g() is monotonic and $\lambda_{R(k)}$ is decreasing with k, the list of PRBs associated to the R(k)-th relay RL stays sorted by decreasing values of g().

Thus, the algorithm may start by assuming that no PRB is used at the R(k)-th relay ($N_{R(k)} = 0$) and add sequentially the PRBs associated to the R(k)-th relay as long as $N_A N_T B_k / f_P^{(-1)}(f_N(A_k)) \geq N_{R(k)}$ where $f_P^{(-1)}$ is the inverse function of $f_P$.

Once the condition is unsatisfied for one PRB, all the following PRBs associated to the R(j)-th Relay RL will not satisfy the condition, whereas all preceding PRBs will still satisfy the condition.

Thus, the algorithm may be simplified in a simple sorting and one-step checking with a stopping condition, as described in the optional features of Fig. 4.

It has to be noted here that if a base station power adjustment $\alpha$ is performed at the base station BS, the order of the list remains unchanged and the one step checking algorithm is still optimal.

The base station power adjustment $\alpha$ may be defined as :

$$\alpha = \frac{N_T N_A}{N_T N_A - M / 2} \text{ and } M = \sum_j N_j .$$

At step S501, the processor 300 associates each PRB to a relay RLj.

For example, the processor 300 obtains, for each PRB used for transferring signal to a terminal TEi with i=1 to $N_{UT}$ located in the cell of the base station BS and for each relay RLj with j=1 to $N_{RN}$, the relay RLj which provides the best path gain.

The processor 300 obtains, for each kth-PRB used for transferring signal, the link $L_{BSTE}$ quality $A_k$ and the link combining $L_{BSRL}$ and $L_{RLTE}$ quality $B_k$.

For example, $A_k$ is the attenuation experienced on the link $L_{BSTE}$ and $B_k$ is the attenuation experienced on the link $L_{BSRL}$ and $L_{RLTE}$.

The path gain is somehow linked to the distance between the terminal TEi and the relay RLj.

In another example, interference plus noise component is used for pairing each PRBk to a relay RL.

The processor 300 defines, for each PRB used for transmission of signals to a terminal TEi located in the cell of the base station BS an index R(k) which is equal to the identifier j of the relay RLj and which is representative of the association of the k-th PRB to the relay RLj.

At next step S502, the processor 300 sorts the index R(k) by decreasing order according to the metric value determined for each PBB according to the following formula :

$$\frac{N_A N_T B_k}{f_P^{(-1)}(f_N(A_k))} .$$

At next step S503, the processor 300 sets, for each relay RLj, the variables $N_j$ and M to null value. The variable $N_j$ is representative of the total number of PRB for which the present algorithm decides that the relay RLj associated to the k-th PRB has to relay signals transferred on PRB.

At next step S504, the processor 300 sets a variable k to one. The variable k is representative of the k-th PRB processed by the present algorithm.

At next step S505, the processor 300 checks if the variable k is equal to or lower than $N_{PRB}$.

If the variable k is equal to or lower than $N_{PRB}$, the processor 300 moves to step S515. Otherwise, the processor 300 moves to step S506.

At step S506, the processor 300 calculates the variable $u(k, M +1)$ according to the following formula :

$$u(k, M+1) = \frac{N_A N_T B_k}{f_P^{(-1)}(f_N(A_k.\alpha(M+1)))}.$$

wherein the base station power adjustment value $\alpha$ is calculated according to the following formula:

$$\alpha(M+1) = \frac{N_T N_A}{N_T N_A - (M+1)/2} \text{ and } M = \sum_j N_j.$$

At next step S507, the processor 300 checks if $N_{R(k)} + 1 \leq u(k, M+1)$.

If $N_{R(k)} + 1 \leq u(k, M+1)$, the processor 300 moves to step S509. Otherwise, the processor 300 moves to step S508.

At step S508, the processor 300 increments the variable k by one and returns to step S505.

At step S509, the processor 300 increments $N_{R(k)}$ by one and stores an indicator notifying that the signal transferred on the k-th PRB will be relayed by the relay RLj with j=R(k).

According to a particular feature, at next step 510, the processor 300 calculates an overloading coefficient β(k).

The overloading coefficient β(k) is a power coefficient to be used by the base station BS for increasing the power of transferred signal on the k-th PRB to another terminal TE.

The overloading coefficient β(k) has to be chosen such that β(k) multiplied by the SINR experienced between the base station BS and the terminal TE for which the k-PRB is relayed by relay RLj is under a pre-determined threshold which is preferably much smaller than one.

The other terminal TE may be selected by sorting by decreasing order of $g(A_k, B_k)$ the terminal TE to which the PRB allocated to that terminal TE has the highest rank.

It has to be noted here that the other terminal TE could in addition be removed from the list of terminals which could be relayed.

After that, the processor 300 returns to step S508.

At step S515, the processor 300 computes for each relay RLj, the relay power correction value $\lambda_j = N_A N_T / N_{j=N_{R(k)}}$.

At next step S516, the processor 300 transfers to each relay RLj, the corresponding relay power correction value $\lambda_j$.

After that, the processor 300 interrupts the present algorithm.

The present invention has been disclosed into examples wherein the downlink signals were relayed or not.

The present invention is also applicable for uplink signals and the algorithms of Figs. 4 and 5 may be applied for relaying or not uplink signals.

In uplink, the base station power adjustment value $\alpha$ should be defined as equal to one.

In the case of OPF protocols, the terminal TE which transfers relayed uplink signals will not transmit during the next time slot, this gives an additional budget of power which can be seen as a power consumption economy and not be used for improving the link quality. The unused time slot may be utilized for improving the link quality, i.e., a power boosting $\min\left(\frac{P_{t\max}}{P_t}, 2\right)$ might be applied at the terminal TE, where Pt is the actual transmit power of the terminal TE in case of no relaying and Ptmax is the maximal transmit power of the terminal TE.

Naturally, many modifications can be made to the embodiments of the invention described above without departing from the scope of the present invention.

## Claims

1. Method for determining if signals transferred between a base station (BS) and a terminal (TE) of a wireless telecommunication network have to be relayed by a relay (RL1), the terminal and the relay being located in an area of the base station, the signals being transferred on physical resource blocks of the wireless telecommunication network, the relay relaying signals, the overall transmission power of the signals transferred by the relay being independent of the number of signals transferred by the relay during a given period of time, the method comprising the steps, executed for each physical resource block of at least a part of the physical resource blocks on which signals are transferred by the base station or the terminal, of:

- calculating (S408) a figure of merit of using relaying for the signal transferred on the physical resource block,
- calculating (S408) a figure of merit of not using relaying for the signal transferred on the physical resource block,
- calculating (S420) a relay power correction value for the relay which is dependent on the number of physical resource blocks on which signals are transferred and relayed by the relay, and
- deciding, according to the calculated figures of merit of using and not using relaying and the relay power

correction value, whether the signal transferred on the physical resource block has to be relayed by the relay or not.

2. Method according to claim 1, **characterised in that** the method further comprises the step of calculating a base station power adjustment value to be applied on signals transferred by the base station, the base station power adjustment value being dependent on the average number of physical resource blocks for which relaying is performed and **in that** the decision whether the signal transferred on the physical resource blocks is relayed or not is further performed according to the base station power adjustment value.

3. Method according to claim 1 or 2, **characterised in that** the relay power correction value and the base station power adjustment value are dependent on the average number $N_j$ of physical resource blocks on which signals are relayed by the relay during $N_T$ time slots, of the number $N_A$ of physical resource blocks available for parallel transmissions during a time slot and the average number of time slots $N_T$ spacing two moments wherein decisions if signals are relayed is taken.

4. Method according to any of the claims 1 to 3, **characterised in that** plural relays (RL1, RL2) are comprised in the area of the base station and **in that** the method comprising further step, executed for each physical resource block, of determining which relay is the best candidate for relaying signal transferred on the physical resource block.

5. Method according to any of the claims 1 to 4, **characterised in that** the decision whether the signal transferred on the physical resource block has to be relayed or not is taken by executing a division between the figure of merit of using relaying for the signal transferred on the physical resource block and the figure of merit of not using relaying for the signal transferred on the physical resource block.

6. Method according to any of the claims 1 to 4, **characterised in that** the decision whether the signal transferred on the physical resource block has to be relayed or not is taken by checking if the figure of merit of using relaying for the signal transferred on the physical resource block is greater than the figure of merit of not using relaying for the signal transferred on the physical resource block.

7. Method according to claim 4, **characterised in that** before calculating the metrics, the method comprises further steps of:

- determining, for each resource block, a value which is representative of the link quality between the base station and the terminal and representative of the link quality between the base station and the terminal via the relay,
- sorting the resource block according to the determined value for the resource block.

8. Method according to claim 7, **characterised in that** the value which is representative of the link quality between the base station and the terminal and representative of the link quality between the base station and the terminal via the relay is not dependent on the relay power correction value and the base station power adjustment value.

9. Method according to any of the claims 1 to 8, **characterised in that** the method comprises the step executed for each physical resource block of calculating a global figure of merit which is dependent on figures of merit of using or not relaying the signals transferred on plural physical resource blocks.

10. Method according to claim 9, **characterised in that** the physical resource blocks are sorted in decreasing order according to a given metric and **in that** the global figure of merit is dependent on figures of merit of using or not relaying signals transferred on physical resource blocks having a lower order than the physical resource block for which decision is taken.

11. Method according to claim 10, **characterised in that** the global figure of merit is dependent on figures of merit of using or not relaying signals transferred on each physical resource block.

12. Method according to any of the claims 1 to 10, **characterised in that** the wireless telecommunication network is a wireless cellular telecommunication network.

13. Device for determining if signals transferred between a base station (BS) and a terminal (TE1) of a wireless telecommunication network have to be relayed by a relay, the terminal and the relay (RL1)being located in an area of the base station, the signals being transferred on physical resource blocks of the wireless telecommunication network, the relay relaying signals, the overall transmission power of the signals transferred by the relay being independent of the number of signals transferred by the relay during a given period of time, the device for determining if signals transferred between a base station and a terminal of a wireless telecommunication network have to be relayed comprises :

- means (300) for calculating, for each physical resource block of at least a part of the physical resource blocks on which signals are transferred by the base station or the terminal, a figure of merit of using relaying for the signal transferred on the physical resource block,
- means (300) for calculating, for each physical resource block of at least a part of the physical resource blocks on which signals are transferred by the base station or the terminal, a figure of merit of not using relaying for the signal transferred on the physical resource block,
- means (300) for calculating, for each physical resource block on of at least a part of the physical resource blocks which signals are transferred by the base station or the terminal, a power correction value for the relay which is dependent on the number of physical resource blocks on which signals are transferred and relayed by the relay, and
- means (300) for deciding, according to the calculated figures of merit of using or not using relaying and the power correction value and for each physical resource block of at least a part of the physical resource blocks on which signals are transferred by the base station or the terminal, whether the signal transferred on the physical resource block has to be relayed by the relay or not.

14. Computer program which is directly loadable into a programmable device, comprising instructions or portions of code for implementing all the steps of any method according to claims 1 to 12, when said computer program is executed on the programmable device.

**Patentansprüche**

1. Verfahren zum Bestimmen, ob zwischen einer Basisstation (BS) und einem Endgerät (TE) eines drahtlosen Telekommunikationsnetzes transferierte Signale durch ein Relais (RL1) weitergeleitet werden müssen, wobei das Endgerät und das Relais in einem Bereich der Basisstation lokalisiert sind, wobei die Signale auf physikalischen Ressourcenblöcken des drahtlosen Telekommunikationsnetzes transferiert werden, wobei das Relais Signale weiterleitet, wobei die gesamte Sendeleistung der durch das Relais transferierten Signale unabhängig ist von der Anzahl von während einer gegebenen Zeitperiode durch das Relais transferierten Signalen, wobei das Verfahren die folgenden Schritte aufweist, die für jeden physikalischen Ressourcenblock von wenigstens einem Teil der physikalischen Ressourcenblöcke ausgeführt werden, auf welchen Signale durch die Basisstation oder das Endgerät transferiert werden:

- Berechnen (S408) eines Bewertungsfaktors eines Verwendens eines Weiterleitens für das auf dem physikalischen Ressourcenblock transferierte Signal,
- Berechnen (S408) eines Bewertungsfaktors eines nicht Verwendens eines Weiterleitens für das auf dem physikalischen Ressourcenblock transferierte Signal,
- Berechnen (S420) eines Relais-Leistungskorrekturwerts für das Relais, der abhängt von der Anzahl von physikalischen Ressourcenblöcken, auf welchen Signale transferiert und durch das Relais weitergeleitet werden, und
- Entscheiden, gemäß den berechneten Bewertungsfaktoren eines Verwendens und nicht Verwendens eines Weiterleitens und dem Relais-Leistungskorrekturwert, ob das auf dem physikalischen Ressourcenblock transferierte Signal durch das Relais weitergeleitet werden muss oder nicht.

2. Verfahren nach Anspruch 1, **dadurch gekennzeichnet, dass** das Verfahren weiterhin den Schritt zum Berechnen eines Basisstations-Leistungseinstellungswerts aufweist, um auf durch die Basisstation transferierte Signale angewendet zu werden, wobei der Basisstations-Leistungseinstellungswert abhängt von der durchschnittlichen Anzahl von physikalischen Ressourcenblöcken, für welche ein Weiterleiten durchgeführt wird, und dass die Entscheidung, ob das auf den physikalischen Ressourcenblöcken transferierte Signal weitergeleitet wird oder nicht, weiterhin gemäß dem Basisstations-Leistungseinstellungswert durchgeführt wird.

3. Verfahren nach Anspruch 1 oder 2, **dadurch gekennzeichnet, dass** der Relais-Leistungskorrekturwert und der Basisstations-Leistungseinstellungswert abhängen von der durchschnittlichen Anzahl $N_j$ von physikalischen Ressourcenblöcken, auf welchen Signale durch das Relais während $N_T$ Zeitschlitzen weitergeleitet werden, von der Anzahl $N_A$ von physikalischen Ressourcenblöcken, die für parallele Sendungen während eines Zeitschlitzes verfügbar sind, und der durchschnittlichen Anzahl von Zeitschlitzen $N_T$, die zwei Momente in einem Abstand anordnen, in welchen Entscheidungen, ob Signale weitergeleitet werden, getroffen werden.

4. Verfahren nach einem der Ansprüche 1 bis 3, **dadurch gekennzeichnet, dass** mehrere Relais (RL1, RL2) in dem Bereich der Basisstation umfasst sind und dass das Verfahren einen für jeden physikalischen Ressourcenblock ausgeführten weiteren Schritt zum Bestimmen aufweist, welches Relais der beste Kandidat zum Weiteleiten eines auf dem physikalischen Ressourcenblock transferierten Signals ist.

5. Verfahren nach einem der Ansprüche 1 bis 4, **dadurch gekennzeichnet, dass** die Entscheidung, ob das auf dem physikalischen Ressourcenblock transferierte Signal weitergeleitet werden muss oder nicht, durch Ausführen einer Teilung zwischen dem Bewertungsfaktor eines Verwendens eines Weiterleitens für das auf dem physikalischen Ressourcenblock transferierte Signal und dem Bewertungsfaktor eines nicht Verwendens eines Weiterleitens für das auf dem physikalischen Ressourcenblock transferierte Signal getroffen wird.

6. Verfahren nach einem der Ansprüche 1 bis 4, **dadurch gekennzeichnet, dass** die Entscheidung, ob das auf dem physikalischen Ressourcenblock transferierte Signal weitergeleitet werden muss oder nicht, durch Prüfen getroffen wird, ob der Bewertungsfaktor eines Verwendens eines Weiterleitens für das auf dem physikalischen Ressourcenblock transferierte Signal größer als der Bewertungsfaktor eines nicht Verwendens eines Weiterleitens für das auf dem physikalischen Ressourcenblock transferierte Signal ist.

7. Verfahren nach Anspruch 4, **dadurch gekennzeichnet, dass** das Verfahren vor einem Berechnen der Metriken folgende weitere Schritte aufweist:

   - Bestimmen eines Werts, der repräsentativ für die Verbindungsqualität zwischen der Basisstation und dem Endgerät ist und repräsentativ für die Verbindungsqualität zwischen der Basisstation und dem Endgerät über das Relais ist, für jeden Ressourcenblock,
   - Sortieren des Ressourcenblocks gemäß dem bestimmten Wert für den Ressourcenblock.

8. Verfahren nach Anspruch 7, **dadurch gekennzeichnet, dass** der Wert, der repräsentativ für die Verbindungsqualität zwischen der Basisstation und dem Endgerät und repräsentativ für die Verbindungsqualität zwischen der Basisstation und dem Endgerät über das Relais ist, nicht von dem Relais-Leistungskorrekturwert und dem Basisstations-Leistungseinstellungswert abhängt.

9. Verfahren nach einem der Ansprüche 1 bis 8, **dadurch gekennzeichnet, dass** das Verfahren den für jeden physikalischen Ressourcenblock ausgeführten Schritt zum Berechnen eines globalen Bewertungsfaktors aufweist, der von Bewertungsfaktoren eines Verwendens oder nicht eines Weiterleitens der auf mehreren physikalischen Ressourcenblöcken transferierten Signale abhängt.

10. Verfahren nach Anspruch 9, **dadurch gekennzeichnet, dass** die physikalischen Ressourcenblöcke in abnehmender Ordnung gemäß einer gegebenen Metrik sortiert werden und dass der globale Bewertungsfaktor abhängt von Bewertungsfaktoren eines Verwendens oder nicht eines Weiterleitens von auf physikalischen Ressourcenblöcken transferierten Signalen mit einer niedrigeren Ordnung als der physikalische Ressourcenblock, für welchen eine Entscheidung getroffen ist.

11. Verfahren nach Anspruch 10, **dadurch gekennzeichnet, dass** der globale Bewertungsfaktor abhängt von Bewertungsfaktoren eines Verwendens oder nicht eines Weiterleitens von auf jedem physikalischen Ressourcenblock transferierten Signalen.

12. Verfahren nach einem der Ansprüche 1 bis 10, **dadurch gekennzeichnet, dass** das drahtlose Telekommunikationsnetz ein drahtloses zellulares Telekommunikationsnetz ist.

**13.** Vorrichtung zum Bestimmen, ob zwischen einer Basisstation (BS) und einem Endgerät (TE1) eines drahtlosen Telekommunikationsnetzes transferierte Signale durch ein Relais weitergeleitet werden müssen, wobei das Endgerät und das Relais (RL1) in einem Bereich der Basisstation lokalisiert sind, wobei die Signale auf physikalischen Ressourcenblöcken des drahtlosen Telekommunikationsnetzes transferiert werden, wobei das Relais Signale weiterleitet, wobei die gesamte Sendeleistung der durch das Relais transferierten Signale unabhängig ist von der Anzahl von durch das Relais während einer gegebenen Zeitperiode transferierten Signalen, wobei die Vorrichtung zum Bestimmen, ob zwischen einer Basisstation und einem Endgerät eines drahtlosen Telekommunikationsnetzes transferierten Signale weitergeleitet werden müssen, folgendes aufweist:

- eine Einrichtung (300) zum Berechnen eines Bewertungsfaktors eines Verwendens eines Weiterleitens für das auf dem physikalischen Ressourcenblock transferierte Signal für jeden physikalischen Ressourcenblock von wenigstens einem Teil der physikalischen Bewertungsblöcke, auf welchen Signale durch die Basisstation oder das Endgerät transferiert werden,
- eine Einrichtung (300) zum Berechnen eines Bewertungsfaktors eines nicht Verwendens eines Weiterleitens für das auf dem physikalischen Ressourcenblock transferierte Signal für jeden physikalischen Ressourcenblock von wenigstens einem Teil der physikalischen Bewertungsblöcke, auf welchen Signale durch die Basisstation oder das Endgerät transferiert werden,
- eine Einrichtung (300) zum Berechnen eines Leistungskorrekturwerts für das Relais, der abhängt von der Anzahl von physikalischen Ressourcenblöcken, auf welchen Signale transferiert und durch das Relais weitergeleitet werden, für jeden physikalischen Ressourcenblock von wenigstens einem Teil der physikalischen Bewertungsblöcke, auf welchen Signale durch die Basisstation oder das Endgerät transferiert werden, und
- eine Einrichtung (300) zum Entscheiden, gemäß den berechneten Bewertungsfaktoren eines Verwendens und nicht Verwendens eines Weiterleitens und dem Leistungskorrekturwert und für jeden physikalischen Ressourcenblock von wenigstens einem Teil der physikalischen Bewertungsblöcke, auf welchen Signale durch die Basisstation oder das Endgerät transferiert werden, ob das auf dem physikalischen Ressourcenblock transferierte Signal durch das Relais weitergeleitet werden muss oder nicht.

**14.** Computerprogramm, das direkt in eine programmierbare Vorrichtung ladbar ist, mit Anweisungen oder Teilbereichen eines Codes zum Implementieren aller Schritte von irgendeinem Verfahren nach den Ansprüchen 1 bis 12, wenn das Computerprogramm auf der programmierbaren Vorrichtung ausgeführt wird.


**Revendications**

**1.** Procédé de détermination si des signaux transférés entre une station de base (BS) et un terminal (TE) d'un réseau de télécommunication sans fil doivent être relayés par un relais (RL1), le terminal et le relais étant situés dans une zone de la station de base, les signaux étant transférés sur des blocs de ressources physiques du réseau de télécommunication sans fil, le relais relayant des signaux, la puissance d'émission globale des signaux transférés par le relais étant indépendante du nombre de signaux transférés par le relais pendant une période de temps donnée, le procédé comportant les étapes exécutées pour chaque bloc de ressources physiques d'au moins une partie des blocs de ressources physiques sur lesquels les signaux sont transférés par la station de base ou le terminal de :

- calcul (S408) d'une figure de mérite d'utiliser le relais pour le signal transféré sur le bloc de ressources physiques,
- calcul (S408) d'une figure de mérite de ne pas utiliser le relais pour le signal transféré sur le bloc de ressource physique,
- calcul (S420) d'une valeur de correction de puissance de relais pour le relais qui dépend du nombre de blocs de ressources physiques sur lesquels les signaux sont transférés et relayés par le relais, et
- décision, selon les figures de mérite calculées d'utiliser et de ne pas utiliser le relais et la valeur de correction de puissance de relais, si le signal transféré sur le bloc de ressources physiques doit être relayé par le relais ou non.

**2.** Procédé selon la revendication 1, **caractérisé en ce que** le procédé comporte en outre l'étape de calcul d'une valeur d'ajustement de puissance de la station de base à appliquer sur des signaux transférés par la station de base, la valeur d'ajustement de puissance de la station de base étant dépendante du nombre moyen de blocs de ressources physiques pour lesquels le relais est effectué et **en ce que** la décision si le signal transféré sur les blocs de ressources physiques est relayé ou non est en outre effectuée en fonction de la valeur d'ajustement de la puissance de la station de base.

**3.** Procédé selon la revendication 1 ou 2, **caractérisé en ce que** la valeur de correction de puissance du relais et la valeur d'ajustement de puissance de la station de base dépendent du nombre moyen $N_j$ de blocs de ressources physiques sur lesquels des signaux sont relayés par le relais pendant des intervalles de temps $N_T$, du nombre $N_A$ des blocs de ressources physiques disponibles pour les transmissions en parallèle pendant un intervalle de temps et le nombre moyen d'intervalles de temps $N_T$ espaçant deux moments où les décisions si les signaux sont relayés sont prises.

**4.** Procédé selon l'une quelconque des revendications 1 à 3, **caractérisé en ce que** plusieurs relais (RL1, RL2) sont compris dans la zone de la station de base et **en ce que** le procédé comporte en outre une étape, exécutée pour chaque bloc de ressources physiques, de détermination du relais qui est le meilleur candidat pour relayer le signal transféré sur le bloc de ressources physiques.

**5.** Procédé selon l'une quelconque des revendications 1 à 4, **caractérisé en ce que** la décision de décider si le signal transféré sur le bloc de ressources physiques doit être relayé ou non est prise en exécutant une division entre la figure de mérite d'utiliser le relais pour le signal transféré sur le bloc de ressources physiques et la figure de mérite de ne pas utiliser le relais pour le signal transféré sur le bloc de ressources physiques.

**6.** Procédé selon l'une quelconque des revendications 1 à 4, **caractérisé en ce que** la décision si le signal transféré sur le bloc de ressources physiques doit être relayé ou non est prise en vérifiant si la figure de mérite d'utiliser le relais pour le signal transféré sur le bloc de ressources physiques est supérieure à la figure de mérite de ne pas utiliser le relais pour le signal transféré sur le bloc de ressources physiques.

**7.** Procédé selon la revendication 4, **caractérisé en ce que**, avant de calculer les métriques, le procédé comprend des étapes supplémentaires de :

- détermination, pour chaque bloc de ressources, d'une valeur qui est représentative de la qualité de la liaison entre la station de base et le terminal et représentative de la qualité de la liaison entre la station de base et le terminal via le relais,
- tri du bloc de ressources en fonction de la valeur déterminée pour le bloc de ressources.

**8.** Procédé selon la revendication 7, **caractérisé en ce que** la valeur qui est représentative de la qualité de la liaison entre la station de base et le terminal et représentative de la qualité de la liaison entre la station de base et le terminal via le relais ne dépend pas de la valeur de correction de puissance du relais et de la valeur d'ajustement de puissance de la station de base.

**9.** Procédé selon l'une quelconque des revendications 1 à 8, **caractérisé en ce que** le procédé comporte l'étape exécutée pour chaque bloc de ressources physiques de calcul d'une figure de mérite globale qui dépend des figures de mérite d'utiliser ou non le relais des signaux transférés sur plusieurs blocs de ressources physiques.

**10.** Procédé selon la revendication 9, **caractérisé en ce que** les blocs de ressources physiques sont triés en ordre décroissant selon une métrique donnée et **en ce que** la valeur globale de mérite dépend des figures de mérite d'utiliser ou non le relais des signaux transférés sur des blocs de ressources physiques ayant un ordre inférieur au bloc de ressources physiques pour lequel la décision est prise.

**11.** Procédé selon la revendication 10, **caractérisé en ce que** la figure globale de mérite dépend des figures de mérite d'utiliser ou non le relais des signaux transférés sur chaque bloc de ressources physiques.

**12.** Procédé selon l'une quelconque des revendications 1 à 10, **caractérisé en ce que** le réseau de télécommunication sans fil est un réseau de télécommunication cellulaire sans fil.

**13.** Dispositif de détermination si les signaux transférés entre une station de base (BS) et un terminal (TE1) d'un réseau de télécommunication sans fil doivent être relayés par un relais, le terminal et le relais (RL1) étant situés dans une zone de la station de base, les signaux étant transférés sur des blocs de ressources physiques du réseau de télécommunication sans fil, le relais relayant les signaux, la puissance d'émission globale des signaux transférés par le relais étant indépendante du nombre de signaux transférés par le relais pendant une période de temps donnée, le dispositif de détermination si les signaux transférés entre une station de base et un terminal d'un réseau de télécommunication sans fil doivent être relayés comportant :

- des moyens (300) de calcul, pour chaque bloc de ressources physiques d'au moins une partie des blocs de ressources physiques sur lesquels les signaux sont transférés par la station de base ou le terminal, d'une figure de mérite d'utiliser le relais pour le signal transféré sur le bloc de ressources physiques,

- des moyens (300) de calcul, pour chaque bloc de ressources physiques d'au moins une partie des blocs de ressources physiques sur lesquels les signaux sont transférés par la station de base ou le terminal, d'une figure de mérite de ne pas utiliser de relais pour le signal transféré sur le bloc de ressources physiques,

- des moyens (300) de calcul, pour chaque bloc de ressources physiques d'au moins une partie des blocs de ressources physiques, sur lesquels des signaux sont transférés par la station de base ou le terminal, d'une valeur de correction de puissance pour le relais qui est dépendante du nombre de blocs de ressources physiques sur lesquels les signaux sont transférés et relayés par le relais, et

- des moyens (300) de décision, selon les figures de mérite calculées d'utiliser ou non le relais et la valeur de correction de puissance et pour chaque bloc de ressources physiques d'au moins une partie des blocs de ressources physiques sur lesquels les signaux sont transférés par la station de base ou le terminal, si le signal transféré sur le bloc de ressources physiques doit être relayé ou non par le relais.

14. Programme informatique qui peut être directement chargé dans un dispositif programmable, comprenant des instructions ou des parties de code pour mettre en oeuvre toutes les étapes de tout procédé selon les revendications 1 à 12, lorsque ledit programme informatique est exécuté sur le dispositif programmable.

Fig. 1

EP 2 257 107 B1

Fig. 2

Fig. 3

S401 — Define indexes R(k) associated to PRB

S402 — Calculate metric $g(A_k, B_k)$

S403 — Sort PRBS and R(k) by deacresing order of metric $g(A_k, B_k)$

S404 — For all j, set $N_j=0$, Gmax=0

S405 — k=1

S406 — $k \leq N_{PRB}$ — Yes

S407 — $N_{R(k)} = N_{R(k)}+1$

S408 — Compute G

S409 — Gmax < G — Yes

S440 — Gmax=G

S411 — k=k+1

S410 — $N_{R(k)} = N_{R(k)}-1$

S420 — Compute λ(j) from $N_j$ and memorize

S430 — Apply the boosting value λ(j) at the RL.

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2398462 A

**Non-patent literature cited in the description**

- **BOZIDAR RADUNOVIC.** *IEEE journal on selected areas in communications,* September 2004, vol. 22 (7